# EUROPEAN PATENT SPECIFICATION

(11) **EP 4 524 036 B1**
(45) Date of publication and mention of the grant of the patent: **15.04.2026**
(21) Application number: 23197955.0
(22) Date of filing: 18.09.2023
(51) Int. Cl.: B64D 37/08

(54) **TOROIDAL TANK AND SPACE VEHICLE**
TOROIDALER TANK UND RAUMFAHRZEUG
RÉSERVOIR TOROIDAL ET VÉHICULE SPATIAL

(43) Date of publication of application: 19.03.2025
(73) Proprietor: ArianeGroup GmbH, 82024 Taufkirchen (DE)
(72) Inventor: Jasjukevics, Arturs, 28199 Bremen (DE); Vosgerau, Bernd, 28199 Bremen (DE); Goek, Sylvain, 28199 Bremen (DE)
(74) Representative: Marschall, Stefan

(56) References cited:
- DE-C1- 19 623 017
- DE-U1- 202015 007 764
- US-A- 4 757 917
- US-A1- 2015 151 855
- US-B2- 7 568 352

## Description

The present invention refers to a toroidal tank referring to the preamble of claim 1, and a vehicle such as a spacecraft.

Toroidal tanks for vehicles such as spacecrafts for storage of one propellant are well known. Also known are toroidal tanks for spacecraft which have two compartments for storing two different propellants (fluids). Known toroidal tank comprises a shell defining a radial inner ring-shaped tank and a radial outer ring tank. Both ring tanks are separated by an internal cylindrical wall. In DE 20 2015 007 764 U1 a wheel with an integrated fluid reservoir is shown. A toroidal tank for a spacecraft having diaphragm walls is known from DE 196 23 017 C1.

It is an object of the invention to provide an alternative toroidal tank, which enables a long-term storage of propellants and a vehicle adapted to be used for long term missions.

This object is solved by a toroidal tank with the features of claim 1, and by a vehicle with the features of claim 9. Advantageous embodiments are disclosed in the dependent claims, the description and the figures.

According to the invention, a toroidal tank for a vehicle is provided, comprising a plurality of bladders inside defining a fluid compartment adapted to receive a fluid to be stored, wherein the plurality of bladders is provided each defining an individual fluid compartment. Thus, the toroidal tank is designed as a bladder tank having at least one bladder for storing one fluid such as a propellent. The inventive bladder enables a long-term storage of a propellant.

The toroidal tank is in particularly suitable for use with High Test Peroxide (HTP, H2O2), including of high concentrations, by reducing the issue of HTP decomposition. Exemplary bladder materials are processable fluoropolymers such as Fluorinated Ethylene Propylene (FEP) and Perfluoralkoxy (PFA). Basically, the materials are chosen according their temperature resistance and their permeability regarding liquids and gases. FEP an PFA show a high temperature resistance in a range of -200°C to +200°C, thus covering the operational temperature of the bladder with margins. Being a true thermoplastic, FEP is a material of choice for the bladder, as it can be vacuum formed and welded. In some cases, it is advantageously if the bladders are tight to liquids but permeable to gases. The plurality of individual bladders is provided, wherein each bladder defines an individual fluid compartment. Such toroidal tank enables a long-term storage of more than one fluid. For instance, the toroidal tank can be used to store a bi-propellant, for instance for vehicles which require the possibility to perform complex manoeuvres in various directions.

In a preferred embodiment, the bladder compartments are arranged in a ring-shape manner, for instance as a radial inner ring and as a radial outer ring. Each ring comprises multiple bladders each forming an individual fluid compartment with an individual bladder tank volume. The individual bladder tank volumes of the radial inner bladders define a joint radial inner tank volume and the individual bladder tank volumes of the multiple radial outer bladders define a joint radial outer tank volume. By means of providing a plurality of small bladder tank volumes and then joining them to large bladder tank volumes, a movement of the propellant fluids around the torus is prevented. Preferably, more (at least not less) radial outer bladders are provided than radial inner bladders.

In order to add the respective individual bladder tank volumes to a large tank volume, the bladders forming a joint tank volume are in fluid connection with a single collector line. In one embodiment, an external first collector line and an external second fluid collector line are provided. The collector lines establish a fluid connection between the respective bladders. This means, some of the bladders are in fluid connection with the external first collector line and the other bladders are in fluid connection with the external second collector line. Preferably, the collector lines are ring shaped. This enables an easy and compact installation of the collector lines at the toroidal tank.

Since the toroidal tank shape does not have a well-defined bottom location, each bladder is equipped with a lower internal collector pipe which is in fluid connection either with the first collector line or with the second collector line.

Preferably, the internal collector pipes extend in circumferential direction of the toroidal tank and are opened at their opposite end faces as well as between their end faces via a sequence of openings. The collector pipe extends on the bottom of each bladder, thereby having a lot of opening over its entire length. A branch line, which is in fluid connection with the respective collector line is preferably positioned in the middle of the collector lines.

In order to maintain the bladders in place, especially in case of axial reverse acceleration, lower halves of the bladders are fixed to their surrounding structure such as an inner surface area of a shell of the toroidal tank. The fixation can be achieved by etching operation on the fluoropolymers side, for instance. Their upper halves remain unfixed to deplete and expel the propellant. If needed, some baffles can be added, for instance 3D-printed, at the interface between two bladders, in order to support the lateral loads during launch and ensure the bladder integrity. Such separation baffle would also present the advantage to supress an interaction between bladders and therefore to enable the bladder structure dynamic verification on single component level only, e.g. qualification bladder, thus mitigating the risks on tank assembly level, e.g. full-scale system demonstrator, with the multiple bladder system inside.

In order to pressurise the compartment for supporting the bladders to be collapsed and to force the propellant to a propulsion system of the vehicles, each bladder (fluid compartment) can be integrated into a pressurisation system.

The use of Hydrogen Peroxide (HTP, H2O2) as a space propellant is complex, in particular the decomposition of the liquid and the resultant build-up of oxygen. Thus, the accumulation of gaseous oxygen inside the bladders is inevitable. Therefore, it is preferred if at least some bladders are integrated in a breather system, in particular those bladders, who are provided to store a gas such as HTP.

An inventive vehicle has a toroidal tank according to the invention. The vehicle can be a spacecraft, a launcher stage etc and enables long term missions.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. For the sake of clarity, only some of the same elements are provided with a reference sign. Terms such as upper or lower refer to the orientation of the toroidal tank at its segments in the figures. Shown is schematically in
- Figure 1: a cross-section view of a toroidal tank according to the invention;
- Figure 2: perspective bottom view of bladders of the toroidal tank;
- Figure 3: an exploded view of the bladders of the toroidal tank;
- Figure 4: perspective view of an arrangement of a radial inner bladder and a radial outer bladder of the toroidal tank;
- Figure 5: a collector pipe inside a bladder of the toroidal tank;
- Figure 6: an enlarged end section of the collector pipe;
- Figure 7: a positioning of a pressurisation tube and of a breather tube.

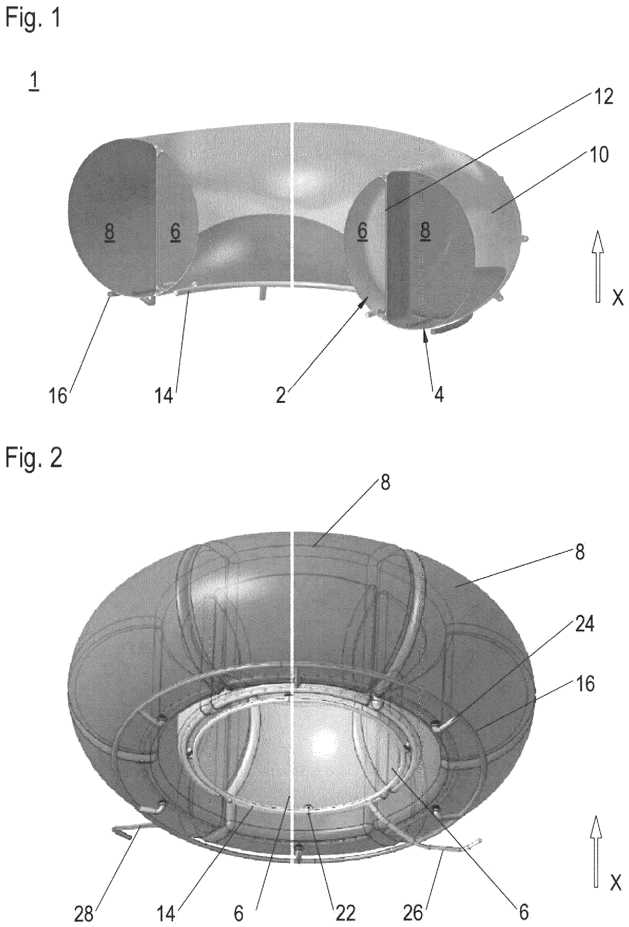

In Figure 1 a cross-section view of an inventive toroidal tank 1 provided as a bladder tank is shown. The toroidal tank 1 can be used as a bi-propellent for a vehicle, such as a spacecraft or a launcher stage. Exemplary bi-propellants are kerosene and H2O2.

The toroidal tank 1 has a radial inner ring-shaped tank section 2 and a radial outer ring-shaped tank section 4. Each tank section 2, 4, provide a tank volume for storing propellants. For instance, in the radial inner ring tank section 2 the propellant RFI is stored and in the radial outer ring tank section 4 Hydrogen Peroxide (HTP, H2O2) is stored.

Each ring tank section 2, 4 and thus the toroidal tank 1 itself comprises of a plurality of bladders 6, 8. The bladders 6, 8 are positioned side by side in a radial inner area of a shell 10 of the toroidal tank 1 and in a radial outer area of the shell 10. In this embodiment, the interior of the shell 10 is divided into two interior areas by a cylindrical wall 12, thus forming the ring-shape tank sections 2, 4.

The propellants are fed to a propulsion system of the vehicle via external collector lines 14, 16.

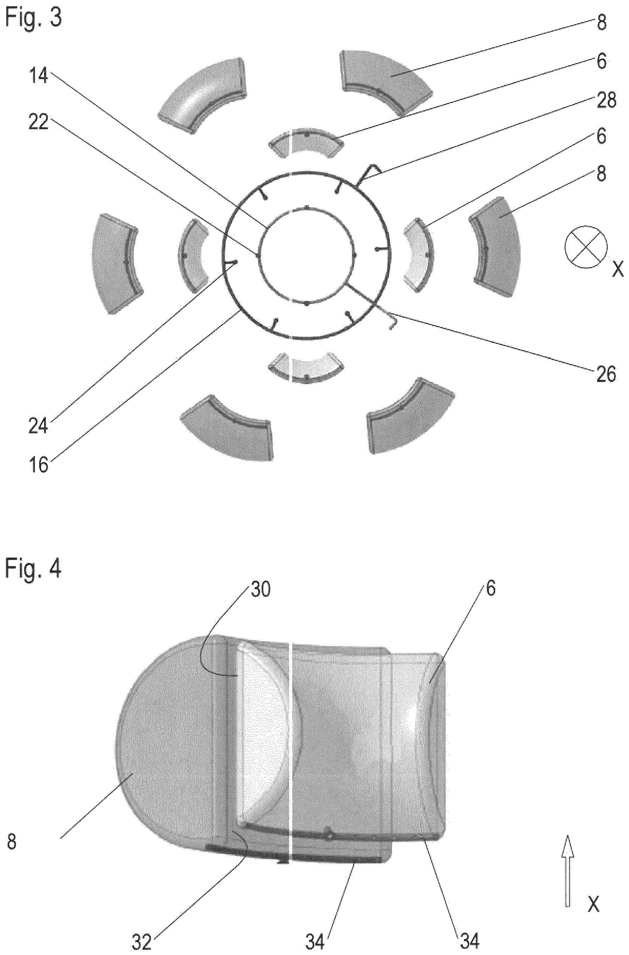

As shown in Figures 2 and 3, each bladder 6, 8 is designed as individual bladder tank forming a fluid compartment. Each radial inner bladder 6forms an individual fluid compartment having an individual tank volume, and each radial outer bladder 8forms an individual fluid compartment having an individual tank volume. The bladders 6, 8 are such shaped, that they correspond with the torus of the toroidal tank 1 if installed.

The radial inner bladders (fluid compartments) 6 are in fluid connection with each other and define the (joint) radial inner tank volume. The radial outer bladders (fluid compartments) 8 are also in fluid connection with each other and define the (joint) radial outer tank volume.

The respective fluid connection is established by the external collector lines 14, 16. The collector lines 14, 16 are ring shaped and concentrically (coaxially) positioned below the toroidal tank 1. The radial inner collector line 14 is in fluid connection with the radial inner bladders 6 via individual branch lines 22, and the radial outer collector line 16 is in fluid connection with the radial outer bladders 8 via individual branch lines 24. An integration of the collector lines 14, 16 in a respective propulsion system of the vehicle is done by a discharge pipe 26, 28.

As illustrated in Figure 4, the radial inner bladders 6 and the radial outer bladders 8 are positioned inside the shell 10 (not shown) of the toroid tank 1 by placing the radial inner bladders 6 with their convex backside 30 on a concave frontside 32 of the radial outer bladders 8. As also shown in Figure 4, each bladder 6, 8 is equipped with the internal collector pipe 34.

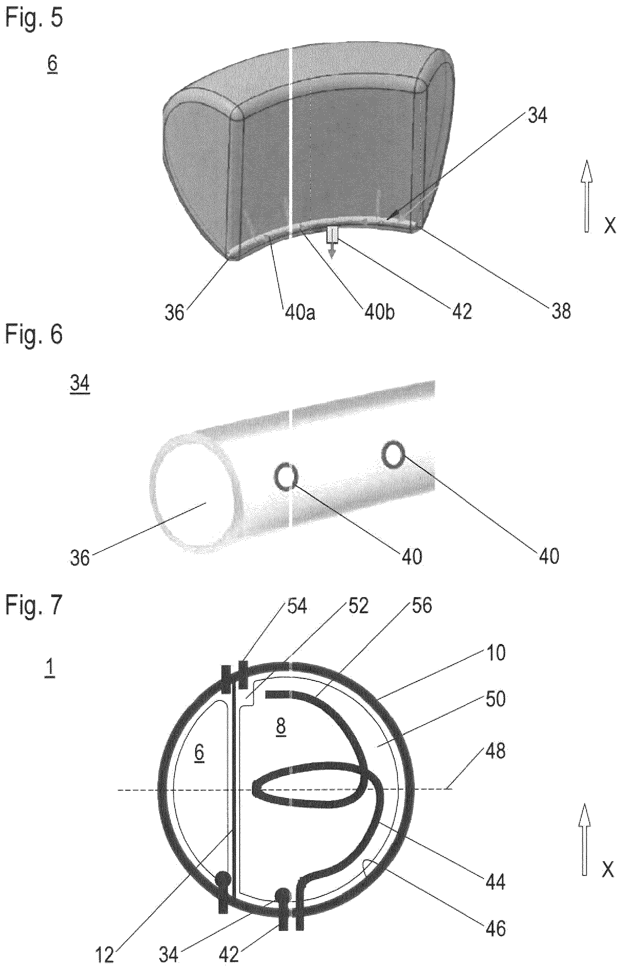

As can be seen in more detail in Figure 5 and Figure 6 with reference to the bladder 6, the collector pipe 34 is positioned on the ground of the bladder 6 and follows an inner contour of the bladder 6. The collector pipe 34 extends over the entire extension of the bladders 6 in circumferential direction of toroidal tank 1. It is opened at its end faces 36, 38 in-between via a plurality of openings 40 penetrating the collector pipe 34. In the middle between the end faces 36, 38, a port 42 is provided adapted to receive the respective branch line 22 of the radial inner collector line 14.

With reference to the bladders 6, 8 in Figure 7, the bladders 6, 8 are fixed with their lower halves 44 to inner surface areas 46 of the shell (bladder half below dotted horizontal line 48). With their upper halves 50, the bladders 6, 8 are unfixed. If the bladders 6, 8 are filled with propellants, their upper halves 50 abuts against the inner surface 46 of the shell 10. During removing of the propellants, the upper bladder halves 50 are falling down in the direction to their lower halves 44. The bladders 6 collapse.

Exemplary bladder materials are Fluorinated Ethylene Propylene (FEP) and Perfluoralkoxy (PFA).

The propellant is fed to the propulsion system via pressurisation of a cavity 52 above each bladder 6, 8, which forces the propellants out of the bladders 6, 8 via the internal collector pipes 34 (not shown in Figure 7). In order to pressure the upper cavity 52, each cavity 52 is equipped with a pressurisation inlet 54 which is in fluid connection with a pressurisation system.

At least some bladders 8 are integrated in a breather system in order to extract a non desired fluid out of the bladders 8. One example is the use HTP, in particular the decomposition of the liquid and the resultant build-up of oxygen. In order to do this, a breather tube 54 may be implemented at the top 56 of the bladders 8, coiled around the surface and subsequently passed through a boss to provide an exit path.

It is noted that also embodiments of a bladder-based toroidal tank 1 are covered by the invention, which do not show the ring-shape structure 2, 4 separated by a cylindrical wall 12.

Disclosed are a toroidal tank for a vehicle, wherein the toroidal tank is designed as a bladder tank for the storage of bi-propellant, and a space vehicle.

### Reference list

- 1: toroidal tank
- 2: radial inner ring-shaped tank section (ring tank)
- 4: radial outer ring-shaped tank section (ring tank)
- 6: radial inner bladder
- 8: radial outer bladder
- 10: shell of the toroidal tank
- 12: cylindrical wall
- 14: collector line (radial inner)
- 16: collector line (radial outer)
- 22: branch line (radial inner)
- 24: branch line (radial outer)
- 26: discharge pipe
- 28: discharge pipe
- 30: backside
- 32: frontside
- 34: collector pipe
- 36: end face
- 38: end face
- 40: opening
- 42: port
- 44: lower half
- 46: inner surface area
- 48: dotted line
- 50: upper half
- 52: pressurisation inlet
- 54: breather tube
- 56: top of the bladder
- 58: plane material sheet

- X: axial direction

## Claims

1. A toroidal tank (1) for a vehicle, comprising a plurality of bladders (6, 8) inside defining a fluid compartment adapted to receive a fluid to be stored, wherein the plurality of bladders (6, 8) is provided each defining an individual fluid compartment.

2. The toroidal tank according to claim 1, wherein the bladders (6, 8) are arranged in a ring-shape manner, wherein each ring (2, 4) comprises multiple bladders (6, 8) each forming an individual fluid compartment having an individual bladder tank volume, wherein the individual bladder tank volumes of the radial inner bladders (6) define a joint radial inner tank volume and the individual bladder tank volumes of the radial outer bladders (8) define a joint radial outer tank volume.

3. The toroidal tank according to claims 1 or 2, wherein bladders forming a joint tank volume are in fluid connection with a single collector line (14, 16).

4. The toroidal tank according to claim 3, wherein each bladder (6, 8) is equipped with a lower internal collector pipe (34) which is in fluid connection either with the first collector line (14) or with the second collector line (16).

5. The toroidal tank according to claim 4, wherein the internal collector pipes (34) extend in circumferential direction of the toroidal tank (1) and are opened at their opposite end faces (36, 38) as well as in-between.

6. The toroidal tank according to any of the preceding claims, wherein lower halves (44) of the bladders (6, 8) are fixed to their surrounding structure, while their upper halves (50) remain unfixed.

7. The toroidal tank according to any of the preceding claims, wherein each bladder (6, 8) is integrated into a pressurisation system adapted to support a collapsing of the bladders (6, 8).

8. The toroidal tank according to any of the preceding claims, wherein at least some bladders (8) are integrated into a breather system adapted to extract a gas out of the bladders (8).

9. A vehicle such as a spacecraft or a launcher stage comprising a toroidal tank (1) according to any of the preceding claims.

## Patentansprüche

1. Ringförmiger Tank (1) für ein Fahrzeug, der im Inneren eine Vielzahl von Blasen (6, 8) umfasst, die eine Fluidkammer definieren, die dazu ausgelegt ist, ein zu lagerndes Fluid aufzunehmen, wobei die Vielzahl von Blasen (6, 8) jeweils so vorgesehen sind, dass sie eine einzelne Fluidkammer definieren.

2. Ringförmiger Tank nach Anspruch 1, wobei die Blasen (6, 8) auf eine ringförmige Weise angeordnet sind, wobei jeder Ring (2, 4) mehrere Blasen (6, 8) umfasst, die jeweils eine einzelne Fluidkammer mit einem einzelnen Blasentankvolumen bilden, wobei die einzelnen Blasentankvolumina der radialen inneren Blasen (6) ein gemeinsames radiales inneres Tankvolumen definieren und die einzelnen Blasentankvolumina der radialen äußeren Blasen (8) ein gemeinsames radiales äußeres Tankvolumen definieren.

3. Ringförmiger Tank nach den Ansprüchen 1 oder 2, wobei die Blasen, die ein gemeinsames Tankvolumen bilden, mit einer einzigen Sammelleitung (14, 16) in Fluidverbindung stehen.

4. Ringförmiger Tank nach Anspruch 3, wobei jede Blase (6, 8) mit einem unteren internen Sammelrohr (34) ausgestattet ist, das entweder mit der ersten Sammelleitung (14) oder mit der zweiten Sammelleitung (16) in Fluidverbindung steht.

5. Ringförmiger Tank nach Anspruch 4, wobei die internen Sammelrohre (34) sich in der Umlaufrichtung des ringförmigen Tanks (1) erstrecken und an ihren gegenüberliegenden Endflächen (36, 38) sowie dazwischen geöffnet sind.

6. Ringförmiger Tank nach einem der vorhergehenden Ansprüche, wobei die unteren Hälften (44) der Blasen (6, 8) an ihrer umgebenden Struktur befestigt sind, während ihre oberen Hälften (50) unbefestigt bleiben.

7. Ringförmiger Tank nach einem der vorhergehenden Ansprüche, wobei jede Blase (6, 8) in ein Überdrucksystem integriert ist, das dazu ausgelegt ist, ein Zusammenfallen der Blasen (6, 8) zu unterstützen.

8. Ringförmiger Tank nach einem der vorhergehenden Ansprüche, wobei mindestens einige Blasen (8) in ein Entlüftungssystem integriert sind, das dazu ausgelegt ist, ein Gas aus den Blasen (8) zu extrahieren.

9. Fahrzeug, wie z. B. ein Raumfahrzeug oder eine Trägerrakete, umfassend einen ringförmigen Tank (1) nach einem der vorhergehenden Ansprüche.

## Revendications

1. Réservoir toroïdal (1) pour un véhicule, contenant une pluralité de vessies (6, 8) définissant un compartiment de fluide adapté pour recevoir un fluide à stocker, dans lequel les vessies de la pluralité de vessies (6, 8) sont pourvues chacune en définissant un compartiment de fluide individuel.

2. Réservoir toroïdal selon la revendication 1, dans lequel les vessies (6, 8) sont agencées en forme d'anneau, dans lequel chaque anneau (2, 4) comprend de multiples vessies (6, 8) formant chacune un compartiment de fluide individuel ayant un volume de réservoir de vessie individuelle, dans lequel les volumes de réservoir de vessie individuelle des vessies internes radiales (6) définissent un volume de réservoir interne radial commun, et les volumes de réservoir de vessie individuelle des vessies externes radiales (8) définissent un volume de réservoir externe radial commun.

3. Réservoir toroïdal selon la revendication 1 ou 2, dans lequel les vessies formant un volume de réservoir commun sont en connexion fluidique avec une ligne de collecte unique (14, 16).

4. Réservoir toroïdal selon la revendication 3, dans lequel chaque vessie (6, 8) est équipée d'un tuyau de collecte interne inférieur (34) qui est en connexion fluidique soit avec la première ligne de collecte (14), soit avec la deuxième ligne de collecte (16).

5. Réservoir toroïdal selon la revendication 4, dans lequel les tuyaux de collecte internes (34) s'étendent en direction circonférentielle du réservoir toroïdal (1) et sont ouverts à leurs faces d'extrémité opposées (36, 38) ainsi qu'entre eux.

6. Réservoir toroïdal selon l'une quelconque des revendications précédentes, dans lequel les moitiés inférieures (44) des vessies (6, 8) sont fixées à leur structure environnante, tandis que leurs moitiés supérieures (50) restent non fixées.

7. Réservoir toroïdal selon l'une quelconque des revendications précédentes, dans lequel chaque vessie (6, 8) est intégrée dans un système de pressurisation adapté pour supporter un affaissement des vessies (6, 8).

8. Réservoir toroïdal selon l'une quelconque des revendications précédentes, dans lequel au moins certaines vessies (8) sont intégrées dans un système de reniflard adapté pour extraire un gaz des vessies (8).

9. Véhicule tel qu'un vaisseau spatial ou un étage de lanceur, comprenant un réservoir toroïdal (1) selon l'une quelconque des revendications précédentes.
